# EUROPÄISCHE PATENTSCHRIFT

(11) **EP 0 654 778 B1**
(45) Veröffentlichungstag und Bekanntmachung des Hinweises auf die Patenterteilung: **07.01.1998**
(21) Anmeldenummer: 93250316.2
(22) Anmeldetag: 18.11.1993
(51) Int. Cl.: G09G 5/28

(54) **Verfahren zur Textdarstellung auf Bildschirmgeräten**
Method of displaying text on a screen
Méthode d'affichage de texte sur un écran

(43) Veröffentlichungstag der Anmeldung: 24.05.1995
(73) Patentinhaber: ADOBE SYSTEMS INCORPORATED, Mountain View California 94039-7900 (US)
(72) Erfinder: Karow,Peter,Dr., D-22399 Hamburg (DE)
(74) Vertreter: UEXKÜLL & STOLBERG

(56) Entgegenhaltungen:
- EP-A- 0 215 664
- EP-A- 0 428 356
- EP-A- 0 468 652
- PATENT ABSTRACTS OF JAPAN vol. 016, no. 034 (M-1204) 28. Januar 1992 & JP-A-03 243 370 (YUUMIIZU:KK) 30. Oktober 1991
- PETER KAROW 'Schrifttechnologie' 1992 , SPRINGER VERLAG , BERLIN * Seite 132; Abbildungen 81-83 *

## Beschreibung

Die Erfindung betrifft ein Verfahren zur Text- und Grafikdarstellung auf einem Bildschirmgerät, welches ein Bildschirmraster mit einer vorgegebenen Anzahl von Bildpunkten in x- und y-Richtung und einen Bildwiederholspeicher aufweist, wobei die darzustellenden Zeichen (Buchstaben und verwandte grafische Elemente) in Konturformat aus einem Speicher geladen werden, passend zu den Textanforderungen skaliert, gedreht und positioniert werden, und wobei die auf der Kontur jedes Zeichens liegenden Rasterpunkte mittels eines Rasterverfahren ermittelt werden.

Bildschirmgeräte stellen Schriftzeichen und anderen Grafiken gerastert dar. Üblicherweise wird die Bildfläche mit etwa 500 bis 1000 Fernsehzeilen beschrieben, die jeweils aus etwa 600 bis 1200 Bildpunkten (Pixel) bestehen. Ohne Einschränkung der Allgemeinheit wird im folgenden die Länge der Bildpunkte (x-Richtung) als derart eingestellt angenommen, daß sie dem Zeilenabstand (y-Richtung) entspricht und man dadurch quadratische Bildpunkte erhält. Jedem Bildpunkt lassen sich beliebige Farbwerte zuordnen, d.h. Abstufungen der Helligkeiten der einzelnen Farben Rot, Grün und Blau; Texte werden auf Bildschirmgeräten häufig in Schwarzweiß-Darstellung angezeigt, den Farbwerten entsprechen in diesem Fall abgestufte Grauwerte zwischen weiß und schwarz, die durch gleichmäßiges Erregen der Farbzentren für Rot, Grün und Blau mit einer dem gewünschten Grauwert (Helligkeit) entsprechenden Intensität erzeugt werden. Im folgenden wird zur begrifflichen Vereinfachung die Schwarzweiß-Darstellung mit Abstufungen in Grauwerten stellvertretend für beliebige Farben mit Abstufungen in den jeweiligen Farbhelligkeitswerten betrachtet.

Im Rahmen der Büroautomatisierung und der Textgestaltung mit PC's (z.B. Desk Top Publishing, kurz DTP) spielt die Textdarstellung eine besondere Rolle. Seit 1980 haben sich die Hersteller von Computern und Betriebssystemen intensiv bemüht, die Schriftzeichen aus Konturdaten für die Darstellung auf Bildschirmen, in der Regel schwarz-weiß, zu rastern und dabei eine bestmögliche Lesbarkeit und möglichst formgetreue Wiedergabe des Schriftbildes zu erhalten, wie es dann später auf höher auflösenden Ausgabegeräten wie Laserdruckern bzw. -belichtern ausgegeben wird. Dafür ist der Slogan "WYSIWYG" (what you see is what you get) geprägt worden.

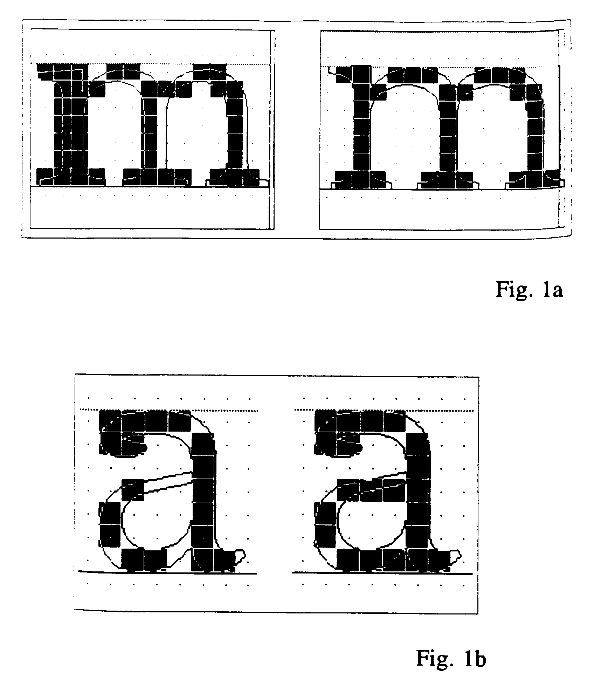

Verschiedene Hersteller haben Datenformate zur Speicherung und Bereithaltung der Schriftzeichen und verwandten Grafikelemente enwickelt, die als intelligente Konturformate bezeichnet werden (intelligent digital outline formats). Schriftzeichen werden aus schwarzen, flächigen Strichen gebildet, deren Konturen (Outlines) stückweise durch kurze Geraden (Vektoren) oder Kurvenstücke beschrieben werden. Als Kurven werden am häufigsten Teilkreise, Abschnitte von quadratischen und von kubischen Splinefunktionen verwendet. Zusätzlich werden diesen Konturbeschreibungen Anweisungen für die Ausführung des Rasterns (hints oder instructions) beigegeben, damit sogenannte Rasterunglücke vermieden werden können. Als solche bezeichnet man zum Beispiel eine Rasterung des Buchstabens m mit unterschiedlich dicken senkrechten Abstrichen, wie im linken Teil von Figur la dargestellt, oder eine Rasterung eines sehr dünnen Striches durch ausschließlich weiße Punkte, wie im linken Teil von Figur 1b dargestellt. Um solche Artefakte und Zufälligkeiten einer Rasterung zu vermeiden, sind Instruktionen z.B. zur Strickstärkenkontrolle (stem control) und zur Stricherhaltung (drop out control) eingeführt worden. Durch Verwendung der Instruktionen können Rasterunglücke vermieden werden, wie im rechten Teil von Figur 1a bzw. 1b für die oben beispielhaft erwähnten Rasterunglücke gezeigt. Eine ausführliche Beschreibung von verschiedenen intelligenten Konturformaten und des intelligenten Rasterns von Schriftzeichen findet man in der Literatur, z.B. "Digitale Schriften", Peter Karow, Springer Verlag 1992, Kap. 8, und "Schrifttechnologie", Peter Karow, Springer Verlag 1992, Kap. 7, wobei die dort gegebene weitere Beschreibung von Konturformaten von Zeichen und deren Rasterung hier ausdrücklich aufgenommen wird. Dort werden auch die heute modernen und gebräuchlisten Schriftformate wie das PostScript Type 1, TrueType- und das IKARUS-Format beschrieben.

Die Verarbeitungsgeschwindigkeit ist eines der wichtigsten Kriterien für ein Skalierprogramm, das Zeichen mit intelligenten Konturbeschreibungen wie PostScript Type 1, TrueType oder IKARUS in Bitmap-Darstellungen für Bildschirme wandelt. Bei Texten kommt es z.B. häufig vor, daß irgendwo auf der Seite ein Wort oder auch nur ein Buchstabe entfernt wird, wonach die Seite ohne wesentliche Zeitverzögerung mit der Änderung neu angezeigt werden muß. In den herkömmlichen Verfahren kann man vier Verarbeitungsphasen unterscheiden, die für eine normale Schrift wie Times Roman bei 12 pt Schriftgröße im Mittel für eine typische Textverarbeitung alle etwa die gleiche Zeit beanspruchen:
1. Schrift aus einem Speicher laden, dekomprimieren, Verwaltung initiieren, generelle Parameter bereitstellen (load);
2. Auswertung der Instruktionen und Herstellung von Konturen, die an das gewünschte Raster (z.B. einer 12 pt-Größe für 72 lpi auf dem Bildschirm) angepaßt sind (grid fit);
3. Ausführung der mathematischen Anweisungen zur Kurven- und Geradenberechnung und Ermittlung der Rasterpunkte, die auf der Kontur liegen (grid walk); und
4. Ausfüllen der schwarzen Bildpunkte zwischen je zwei Konturen (bit fill).

Das Resultat ist eine Bitmap, die die Rasterung des Buchstabens darstellt, wobei die Bitwerte 0 und 1 je nach Definition für weiß und schwarz oder umgekehrt stehen.

Diese Bitmap wird nach Berechnung der Buchstabenposition, die sich aus der Textberechnung in einem geräteunabhängigen Textkoordinatensystem (die Positionen in diesem Textkoordinatensystem werden im folgenden als Textkoordinaten bezeichnet) in einer Feinheit von z.B. 2400 lpi und Einheiten von 1/20 pt (ein pt ist die Größenmaßeinheit für Schriftzeichen und beträgt etwa 0,351 mm (Englisch Pica Point) bzw. 0,375 mm (Didot-Punkt)) ergibt, auf eine ihr entsprechende, relative grobe und mithin gerundete Bildschirmposition in den zugehörigen Bildwiederholspeicher (Video-Ram) kopiert.

Weil die Bildschirmpunkte relativ große Flächen einnehmen, nämliche etwa 0,4 × 0,4 mm² bis 0,25 × 0,25 mm² (ca. 70 lpi bis ca. 100 lpi, lpi = lines per inch), muß man in Kauf nehmen, daß die Rasterung der Schriftzeichen grob ist, und insbesondere für kleinere Schriftgrößen in bezug auf ihre Lesbarkeit unzureichend ist. Ferner muß man in Kauf nehmen, daß die Buchstabenbreiten in ganzen Bildschirmpunkten gerastert werden, dadurch recht unterschiedliche Buchstabenpositionen und Buchstabenabstände ermittelt werden und darunter das Erscheinungsbild der Textzeile insgesamt zwangsläufig leidet. Ebenso werden die Buchstaben auch in y-Richtung jeweils nur auf eine Fernsehzeile genau positioniert, was zu unterschiedlichen Textzeilenabständen in einem Text führt.

Für eine bessere Qualität der Textdarstellung wäre es wünschenswert, die relative Position der Buchstaben nebeneinander genauer zu zeigen, als es mit Einheiten von 0,25 bis 0,4 mm Länge möglich ist, ebenso die Lage der Zeilen untereinander genauer darzustellen als dies mit den Bildpunktgrößen auf den heute üblichen Bildschirmgeräten möglich ist. Zum Vergleich sei angemerkt, daß in der Typografie, der Buchdruckerkunst, wenigstens mit Einheiten von 1/4 pt (ca. 0,1 mm) gearbeitet wird. Da eine derartige Verfeinerung der Bildpunktgröße bzw. der Rastergröße von Bildschirmgeräten in verschiedener Hinsicht zu aufwendig ist, muß nach anderen Wegen gesucht werden, die Lesbarkeit und Bildqualität von Texten und Grafiken auf Bildschirmgeräten mit heute üblichen Auflösungen zu verbessern.

In EP-A-0 428 356 ist ein Zeichengenerator mit Graudarstellung, insbesondere für Laserdrucker, beschrieben. Es wird eine Graudarstellung für ein Zeichen erzeugt, indem das Zeichen in einem Feinraster mit m x n feinerer Rasterung gerastert und eine entsprechend feinere Bitmap gefüllt wird, die anschließend ausgezählt wird, um zu einer Graudarstellung im Ausgaberaster zu gelangen. Eine Positionierung des Zeichens relativ zum Feinraster wird allerdings nicht vorgenommen, so daß bezüglich einer besseren Feinpositionierung der Zeichen nichts gewonnen ist.

Ein entsprechender Zeichgenerator für eine Anzeigevorrichtung ist in EP-A-0 468 652 beschrieben. Auch dabei wird eine Graudarstellung für ein Zeichen erzeugt, indem das Zeichen in einem Feinraster mit m x n feinerer Rasterung gerastert und eine entsprechend feinere Bitmap gefüllt wird. Das Zeichen wird dazu im Feinraster in bestimmter, vorgegebener Weise positioniert, so daß sich eine bevorzugte Graudarstelllung ergeben soll. Die Positionierung des Zeichens im Feinraster wird daher nicht berücksichtigt, um davon abhängig eine Grauvariante des Buchstabens zu erhalten. Stattdessen wird das Zeichen so relativ zu den Rastern verschoben, daß sich eine ganz bestimmte Graudarstellung für das Zeichen ergibt, die nicht mehr abhängig von der relativen Lage des Zeichens im Feinraster ist. Ferner ist die Bitmap-darstellung des Zeichens im Feinraster nachteilig, da die anschließende Umrechnung auf die Graudarstellung im Bildschirmraster zeitaufwendig ist.

Ähnliche Verfahren sind auch aus der Veröffentlichung Patent Abstracts of Japan, vol. 016, no. 034 (M-1204) & JP-A-03 243 370, wie auch aus der auf Seite 3 erwähnten "Schrifttechnologie", Seite 132, bekannt.

Aus EP-A 0 132 456 ist ein Verfahren zur Kontrolle der Satzqualität von elektronischen Satzanlagen durch Anzeige des Satzbildes auf einem Monitor bekannt. In der Satzanlage ist die Bitmap einer ganzen zu druckenden Seite, mit der ein Film belichtet werden soll, in sehr feiner Rasterung abgespeichert. Um vor Belichtung des Films eine Kontrolle des Satzbildes zu ermöglichen, wird die komplette Bitmap der Seite ausgelesen und auf ein gröberes Raster für den Monitor gewandelt, indem jeweils m aufeinanderfolgende Pixel von n benachbarten Zeilen zusammengefaßt werden und der durchschnittliche Grauwert dieses m x n Überpixels bestimmt und diese Überpixel als Bildschirm-Pixel auf dem Monitor angezeigt wird. Ein derartiges Verfahren ist jedoch für die Textdarstellung auf einfachen Bildschirmgeräten (Personal Computern) nicht praktikabel, da eine feingerasterte Bitmap einer zu druckenden Seite erst in den Ausgabegeräten von dazu ausgelegten Prozessoren (RIPs, Raster Image Processors) unter erheblichem Zeitaufwand erstellt wird und erst wieder in den PC zurücktransferiert werden müßte, was insgesamt zu völlig unakzeptablen Antwortzeiten führen würde, da bei interaktivem Arbeiten am Bildschirm eine praktisch verzögerungsfreie Anzeige gefordert wird. Im übrigen müßte bei jeder Änderung der Seite, sei es auch nur ein Buchstabe, die ganze Seite neu im Feinraster erstellt werden und wieder ins Bildschirmraster zurücktransformiert werden, was sich aus Gründen der Verarbeitungsgeschwindigkeit verbietet.

Es ist Aufgabe der vorliegenden Erfindung, ein Verfahren zur Darstellung von Zeichen und Grafikelementen auf Bildschirmgeräten zu schaffen, mit dem die Lesbarkeit und Bildqualität bei gleicher Bildschirmauflösung gegenüber herkömmlichen Verfahren bei einem für interaktive Anwendungen vertretbaren Zeitaufwand verbessert wird.

Erfindungsgemäß ist ein Verfahren zur Text- und Grafikdarstellung auf einem Bildschirmgerät, welches ein Bildschirmraster mit einer vorgegebenen Anzahl von Bildpunkten in x- und y-Richtung und einen Bildwiederholspeicher aufweist, wobei die darzustellenden Zeichen (Buchstaben und verwandte grafische Elemente) in Konturformat aus einem Speicher geladen werden, passend zu den Textanforderungen skaliert, gedreht und positioniert werden, und wobei die auf der Kontur jedes Zeichens liegenden Rasterpunkte mittels eines Rasterverfahren ermittelt werden (grid walk), wobei
die Rasterung und Positionierung der Zeichen zeichenweise in einem Feinraster vorgenommen wird, in welchem jeder Bildpunkt des Bildschirmrasters in x-Richtung in m und in y-Richtung in n Feinraster-Bildpunkte unterteilt ist, wobei m, n natürliche Zahlen größer 1 sind, und jedes einzelne Zeichen in dem Feinraster in eine Lauflängen-Kodierung seiner Außenkontur gewandelt wird, bei der in jeder Feinrasterzeile der Anfangsrasterpunkt jedes aus mindestens einem gefüllten Bildpunkt bestehenden Striches in x-Richtung und die Differenz zwischen End- und Anfangsrasterpunkt des Strichs angegeben wird, und
die jeweils m × n Feinraster-Bildpunkte in jedem Bildschirmraster-Bildpunkt jedes Zeichens durch Addieren ihrer Bitwerte durch direkte Umrechnung der Lauflängen-Kodierung zusammengefaßt werden und dem Bildschirmraster-Bildpunkt ein von der Summe abhängiger Grauwert zugewiesen und in den Bildwiederholspeicher, der eine Bit-Tiefe von wenigstens der Anzahl der vorgesehenen Grauwerte aufweist (Viertelbyte-, Halbbyte-, Bytemap-Speicher), geschrieben wird.

Mit dem erfindungsgemäßen Verfahren ergibt sich (1.) eine bessere Darstellung des Einzelzeichens, (2.) eine bessere Positionierung der Zeichen in einer Zeile (in x-Richtung), (3.) eine bessere Positionierung der Zeilen untereinander (in y-Richtung), und damit insgesamt (4.) eine bessere Lesbarkeit und Formgetreuheit des Schriftbildes bzw. von Grafikteilen.

Es ist ein wesentlicher Vorteil der vorliegenden Erfindung, daß die Bildschirmdarstellung sehr schnell erzeugt werden kann, so daß sich in dieser Hinsicht kein Nachteil gegenüber dem herkömmlichen Verfahren mit schlechterer Bildqualität ergibt. Damit ist das erfindungsgemäße Verfahren sehr gut für interaktive Anwendungen geeignet, bei denen später auf hochauflösenden Druckern auszugebende Seiten immer wieder verändert werden und damit häufig, und ohne für den Benutzer merkliche Zeitverzögerung neu aufgebaut werden müssen.

In einem ersten Schritt des erfindungsgemäßen Verfahrens wird jedes angeforderte Zeichen in einem Feinraster gerastert, in dem jeder Bildpunkt des Bildschirmrasters in x-Richtung bzw. y-Richtung m-fach bzw. n-fach unterteilt ist, so daß in jedem Bildschirmraster-Bildpunkt m × n Feinraster-Bildpunkte liegen. Jedes einzelne Zeichen wird in dem Feinraster unter Verwendung seiner Konturkodierung mittels herkömmlicher Verfahren zur Rasterung gerastert; dadurch werden die auf der Kontur liegenden Feinrasterpunkte bestimmt (grid walk), wobei als Kodierung eine Lauflängen- Darstellung in dem Feinraster gewählt wird. Damit ist die benötigte Information für die Zeichendarstellung im Feinraster bereitgestellt, und jedem Bildpunkt des Feinrasters kann prinzipiell ein Farbwert 1 oder 0 zugewiesen werden (für an oder aus in den Farben rot, grün, blau oder schwarz-weiß).

Im nächsten Schritt werden nun jeweils die m × n Feinraster-Bildpunkte jedes Bildschirmraster-Bildpunktes eines Zeichens zusammengefaßt, indem die Feinraster-Bitwerte (1 oder 0) durch direkte Umrechnung aus der Lauflängen-Kodierung addiert werden und dem Bildschirmraster-Bildpunkt ein von der Summe der m × n Bitwerte abhängiger Farb-Helligkeitswert (Grauwert bei Schwarzweiß-Darstellung) zugewiesen wird. Damit wird ein Teil des höheren Informationsgehalts des Feinrasters in das gröbere Bildschirmraster übernommen, indem dessen Grauwert abhängig von der Anzahl der gefüllten (schwarzen) Feinraster-Bildpunkte bestimmt und in den Wiederholspeicher (z.B. Video-RAM) des Bildschirmgerätes geschrieben wird.

In einer bevorzugten Ausführungsform wird eine Grauabstufung in (n × m + 1) Grauwerte von weiß bis schwarz vorgesehen und die Grauwerte durch die Summe der Bitwerte der Feinraster-Bildpunkte repräsentiert, so daß sich Grauwerte 0, 1,...., n × m von weiß bis schwarz (oder umgekehrt) ergeben. Im Ergebnis bedeutet dies, daß der Grauwert eines Bildschirmraster-Bildpunktes durch den verhältnismäßigen Anteil der darin befindlichen gefüllten Feinraster-Bildpunkte bestimmt wird, d.h. der Grauwert ist proportional zum Flächenverhältnis von gefüllten (schwarzen) Feinraster-Bildpunkten zur Gesamtfläche des Bildschirmraster-Bildpunktes und entspricht mithin einem durchschnittlicher Grauwert. Es können aber auch andere Abstufungen der Grauwerte vorgenommen werden, insbesondere auch nichtlineare Abhängigkeiten des Grauwertes von der Anzahl der gefüllten Feinraster-Bildpunkte vorgesehen werden.

In einer bevorzugten Ausführungsform des Verfahrens wird jeder ermittelte Grauwert eines Bildschirmraster-Bildpunktes in den Wiederholspeicher geschrieben, indem er auf den Inhalt des diesem Bildschirmraster-Bildpunkt entsprechenden Speicherplatzes im Wiederholspeicher addiert wird. Dadurch wird sichergestellt, daß, wenn sich benachbarte Zeichen sehr nahe kommen, sich in ihren Zwischenräumen die Grauwerte in den Bildschirmpunkten richtig überlagern, d.h. der Grauwert eines Bildpunktes eines ersten, bereits in den Wiederholspeicher eingeschriebenen Zeichens wird zu dem Grauwert eines später verarbeiteten Zeichens, das in den gleichen Bildschirm-Bildpunkt hineinreicht, addiert.

Da bei den meisten Wiederholspeichern, insbesondere Video-RAMs, die Addition auf einen Speicherplatz als Grundfunktion integriert ist, wird damit eine sehr einfache und schnelle Realisierung des Verfahrens erreicht.

Mit dem erfindungsgemäßen Verfahren wird eine deutlich verbesserte Lesbarkeit und Bildqualität erreicht, ohne daß sich der Rechenaufwand und damit die Zeit zum Aufbau eines Bildschirmbildes erhöht. Eine Zeitersparnis kann sich mit dem vorliegenden Verfahren insbesondere ergeben, da bei der Rasterung des Zeichens auf den Schritt 2. (grid fit) des oben aufgeführten herkömmlichen Verfahrens verzichtet werden kann. Eine optimale Einpassung des Zeichens in das Feinraster mit Hilfe intelligenter Rastertechniken ist nicht erforderlich, da dieses Feinraster feiner ist als das zur Darstellung kommende und sich die auf der Feinrasterebene auftretenden Rasterunglücke auf der Bildschirm-Bildpunktebene nur in vernachlässigbarem Maße auswirken. Dadurch kann, insbesondere wenn hohe Prozeßgeschwindigkeit für die Bilddarstellung erforderlich ist, in vorteilhafter Weise auf das intelligente Rastern unter Verwendung der Instruktionen im Konturformat verzichtet werden, um Rechenzeit zu sparen.

Ebenso braucht der Schritt 4. (bit fill) des obigen herkömmlichen Verfahrens nicht ausgeführt zu werden, da die Rasterung der Außenkontur im Feinraster ausreichend ist, um die Summe der in einem Bildschirmraster-Bildpunkt liegenden gefüllten Feinraster-Bildpunkte zu bestimmen.

Gemäß einem weiteren Aspekt der Erfindung ist ein Verfahren der oben genmannten Art beansprucht, wobei
vor Beginn einer Textdarstellung nur einmal alle Zeichen einer vom Benutzer gewählten Schrift in einem Feinraster gerastert werden, das in x-Richtung m-fach und in y-Richtung n-fach feiner ist als das Bildschirmraster, wobei m, n natürliche Zahlen größer 1 sind, und alle gerasterten Zeichen in eine Lauflängen-Kodierung ihrer Außenkontur gewandelt und in einem Zwischenspeicher abgespeichert werden, bei der in jeder Feinrasterzeile der Anfangsrasterpunkt jedes aus mindestens einem gefüllten Bildpunkt bestehenden Striches in x-Richtung und die Differenz zwischen End- und Anfangsrasterpunkt des Strichs angegeben wird,
zur Textdarstellung die feingerasterten Zeichen nach den Textanforderungen aus dem Zwischenspeicher abgerufen und nach ihrer Textposition in eine entsprechende Feinrasterposition im Bildschirmraster übertragen werden, und
die jeweils m × n Feinraster-Bildpunkte in jedem Bildschirmraster-Bildpunkt jedes Zeichens durch Addieren ihrer Bitwerte durch direkte Umrechnung der Lauflängen-Kodierung zusammengefaßt werden und dem Bildschirmraster-Bildpunkt ein von der Summe abhängiger Grauwert zugewiesen und in den Bildwiederholspeicher, der eine Bit-Tiefe von wenigstens der Anzahl der vorgesehenen Grauwerte aufweist (Viertelbyte-, Halbbyte-, Bytemap-Speicher), geschrieben wird.

Bei dem zuletzt genannten erfindungsgemäßen Verfahren wird die Verarbeitungsgeschwindigkeit dadurch weiter erhöht, daß die Buchstaben einer gewünschten Schrift nur einmal zu Beginn im Feinraster gerastert und abgespeichert werden und anschließend, jedesmal wenn sie im Text benötigt werden, nur noch abgerufen und in die entsprechende Textposition versetzt werden müssen, um die Graudarstellung im Bildschirmraster zu ermitteln.

Die Erfindung wird im folgenden anhand der Figuren näher erläutert; es zeigen:
- Figur 1a:: Rasterdarstellungen eines Zeichens, links einfach gerastert, rechts mit einem intelligenten Rasterverfahren unter Benutzung der Instruktionen (Strichstärkenkontrolle);
- Figur 1b:: Rasterdarstellungen eines Zeichens, links einfach gerastert, rechts mit einem intelligenten Rasterverfahren unter Benutzung der Instruktionen (Stricherhaltung);
- Figur 2a:: Linien in der Stärke eines Bildschirmpunktes mit verschiedenen Grauwerten (Originalgröße);
- Figur 2b:: die Linien aus Figur 2a in zweifacher Vergrößerung;
- Figur 3a:: Buchstabenpaare mit verschiedenen Grauwerten in ihrem Zwischenraum (Originalgröße);
- Figur 3b:: Vergrößerung der Buchstabenpaare aus Figur 3a;
- Figur 4a und 4b:: die Darstellung eines mehrzeiligen Textes in 9 pt aus der Schrift Nimbus Roman, wobei zum Vergleich der Text mit einem herkömmlichen Verfahren (Figur 4a) und in Graudarstellung (Figur 4b) auf demgleichen Bildschirmgerät zur Darstellung gebracht ist;
- Figur 5:: Feinraster der Außenkontur des Buchstabens b;
- Figur 6:: Buchstabe b (um 90° gedreht) in Lauflängendarstellung;
- Figur 7:: Darstellung eines Buchstabens im Feinraster, die das Auszählen der in einen m × n Bildschirm-Bildpunkt fallenden Feinraster-Bildpunkte illustriert; diese Figur dient nur der Erläuterung, ist aber kein Teil der Erfindung.
- Figur 8:: vergrößerte Darstellung des nach dem erfindungsgemäßen Verfahren resultierenden Buchstabens in Graudarstellung im Bildschirmraster; und
- Figur 9a und 9b:: die 16 verschieden Graudarstellungen des Buchstabens o, die bei Verschiebung des o entlang der Feinraster-Bildpunkte (m = 4, n = 4) um jeweils einen Feinrasterpunkt in x- und y-Richtung möglich sind, wobei Figur 9a die Originalgröße auf einem typischen Bildschirmgerät und Figur 9b eine Vergrößerung zeigt.

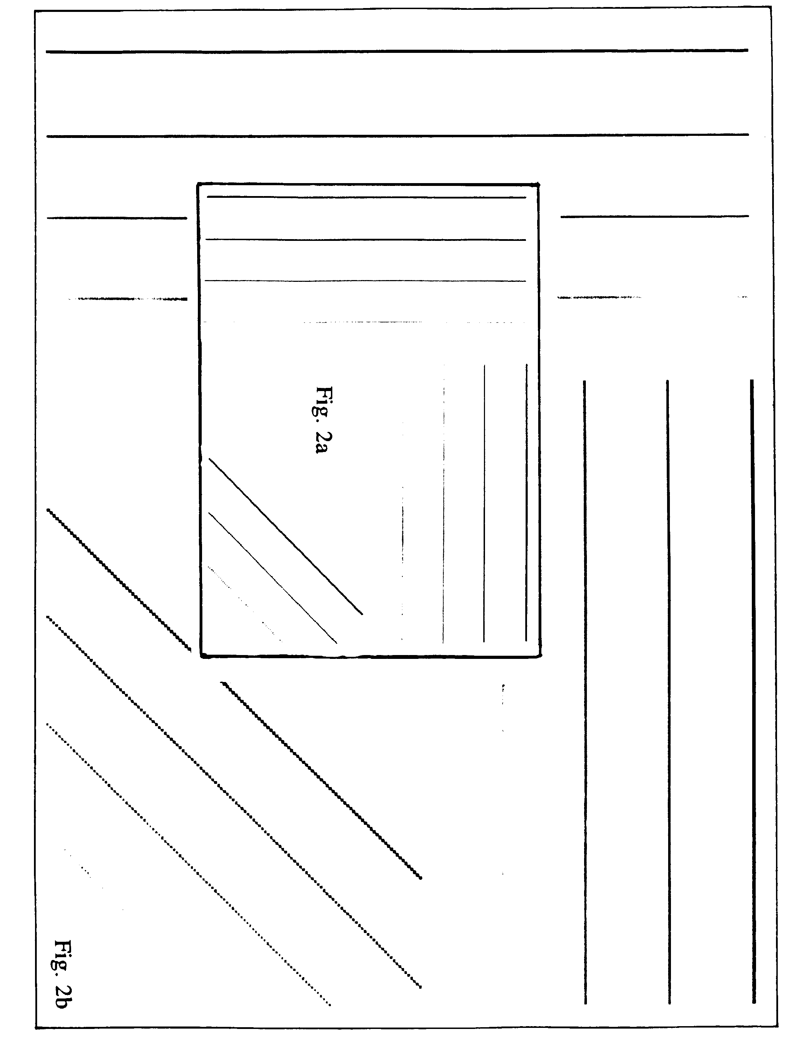

Mit dem erfindungsgemäßen Verfahren wird erreicht, daß man optisch mit kleineren Bildpunkten arbeiten kann als diese auf dem Bildschirmgerät zur Verfügung stehen. Dabei wird folgend physiologische Tatsache ausgenutzt: Mit den Augen nehmen wir Linien von der Stärke eine typografischen Punktes (also ab 72 lpi) als dünner wahr, wenn sie weniger schwarz, also grau dargestellt werden. Dies ist in Figur 2a zu erkennen, wo nebeneinander Linien gleicher Breite aber mit verschiedenen Grauwerten dargestellt sind. In Figur 2b ist zum Vergleich die Darstellung aus Figur 2a zweifach vergrößert gezeigt. Daraus wird deutlich, daß Linien abhängig vom Grauwert dünner oder dicker erscheinen, auch wenn ihre tatsächliche Breite die gleiche ist.

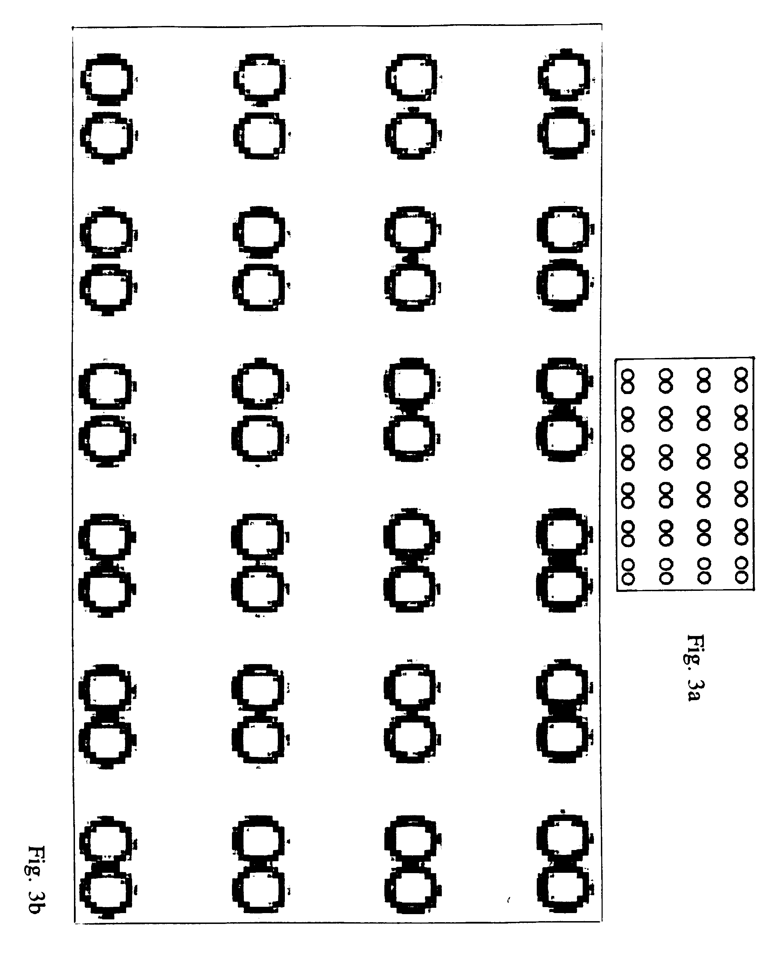

Ferner erscheint uns eine schwarze Fläche bereits verschoben, wenn wir in einer Richtung, z.B. in der Breite einer Fernsehzeile, grau hinzufügen. Insbesondere nehmen wir einen Abstand zweier Buchstaben schon dann wahr, wenn zwischen ihnen bloß grau eingefügt wird, wie dies in Figur 3a zu sehen ist. Je heller der eingeschobene Punkt ist, desto weiter erscheinen die Buchstaben getrennt; in Figur 3b sind die Buchstabenpaare aus Figur 3a vergrößert (und in umgekehrter Anordnung) dargestellt. Die übereinanderliegenden Zeilen unterscheiden sich jeweils nur durch Verschiebungen im Feinraster, die zu leicht unterschiedlichen Graudarstellungen führen.

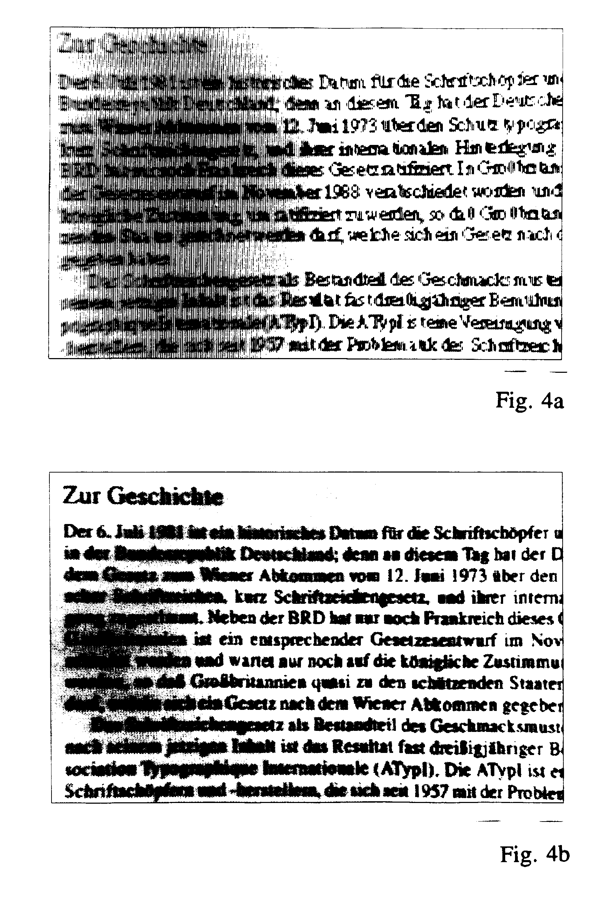

Am deutlichsten wird der Unterschied zwischen einer herkömmlichen schwarz-weiß- und einer erfindungsgemäß für Bildschirmgeräte vorzunehmende Graudarstellung bei Betrachtung eines mehrzeiligen Textes beim Vergleich des gesamten Erscheinungsbildes auf dem Bildschirmgerät. In Figur 4a ist ein mehrzeiliger Text mit einem herkömmlichen Verfahren auf einem Bildschirmgerät dargestellt, während der gleiche Text auf dem gleichen Bildschirmgerät mit dem erfindungsgemäßen Verfahren ein in Figur 4b entsprechendes Schriftbild ergibt. Die Verbesserung der Lesbarkeit und die im Gesamteindruck verbesserte Bildqualität sind deutlich zu erkennen.

Frühere Untersuchungen an Bildschirmen (Xerox, Tektronix in "Visual Fatigue and Operator Performance with DVST and Raster Displays", Proc. of the Society for Information Display, Vol. 24, Nr. 1, 1983) hatten ergeben, daß die untersuchten Personen bei der Erkennung und Fixierung von grau dargestellten Buchstaben ermüdeten. Weil nämlich die Graudarstellung einen zum Teil unscharfen Rand der schwarzen Buchstabenflächen verursacht, hatten die Probanden versucht, die Buchstaben immer wieder erneut zu fokussieren in der unbewußten Annahme, daß wahrzunehmende Bild nicht ganz scharf eingestellt zu haben. Nun kommt es aber beim Lesen von Texten nur selten und dann auch nur kurz vor, daß wir die Buchstaben fixieren, denn wir lesen Text, indem wir mit den Augen in sogenannten Sakkaden springen. Also ist es für uns natürlich, daß wir beim Lesen den größten Teil eines Textes nur grau wahrnehmen. Hierin liegt eine weitere physiologische Begründung dafür, daß Graudarstellung von Texten gleichbedeutend mit genauerer, also höher auflösender Darstellung empfunden wird.

In einem Ausführungsbeispiel wird ein Bildschirmgerät mit einer Fläche von etwa 1000 X 1000 Bildpunkten zugrunde gelegt und ferner eine reine Schwarzweiß-Darstellung betrachtet. Für das Feinraster wird in x-Richtung eine m-fache Feinunterteilung und in y-Richtung eine n-fache Feinunterteilung vorgenommen, wobei in einer bevorzugten Ausführungsform m = 8 und n = 4 ist. Damit wird gemäß den Erfahrungen aus der Typografie erreicht, daß man auf einen 1/4 Punkt genau (ca. 0,1 mm) positionieren kann.

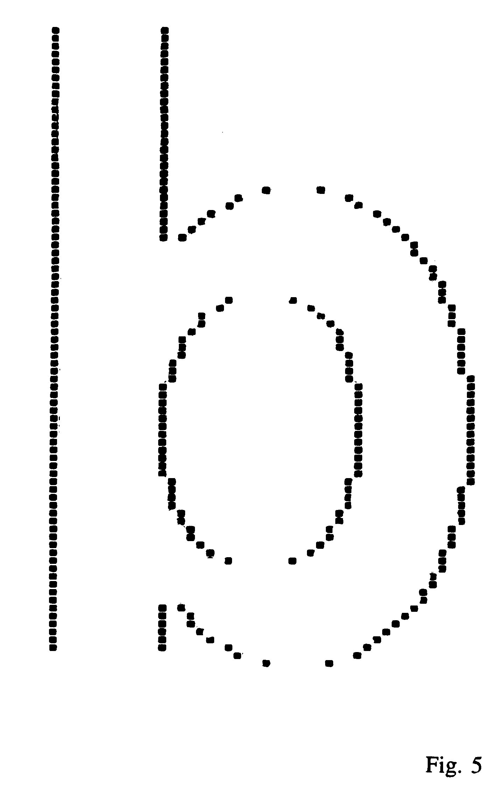

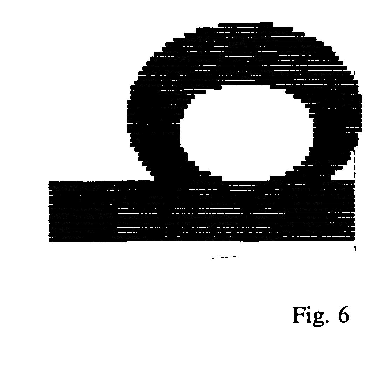

In dem erfindungsgemäßen Verfahren wird die Position des Zeichens in dem Feinraster bestimmt, d.h. das Zeichen wird in das Feinraster gelegt und gerastert, wobei eines der bekannten Verfahren zur Rasterung verwendet werden kann. Dabei können einfache Rasterverfahren verwendet werden, so daß auf die Verwendung der heute regelmäßig in den Konturformaten der Buchstaben mit abgespeicherten Instruktionen und die Anwendung intelligenter Rasterverfahren (grid fit) verzichtet werden kann. Das Ergebnis der Rasterung in dem Feinraster ist in Figur 5 für den Klenbuchstaben b dargestellt. Die auf der Kontur liegenden Gitterpunkte werden mit einem der bekannten Verfahren bei der Gitterwanderung (grid walk) bestimmt. Auf das Ausfüllen der Flächen mit schwarzen Bildpunkten (bit fill) kann verzichtet werden. Statt dessen wird eine Lauflängen-Kodierung erhalten. Bei der Lauf längen-Kodierung wird das Zeichen zeilenweise erfaßt, indem in jeder Feinrasterzeile der Anfangsrasterpunkt jedes aus mindestens einem gefüllten Bildpunkt bestehenden Striches in x-Richtung und die Differenz zwischen End- und Anfangsrasterpunkt des Strichs, d.h. die Lauflänge in Einheiten von Bildpunkten in dem Feinraster angegeben wird. Figur 6 illustriert die Lauf längen-Kodierung, dargestellt für ein liegendes b, wobei die Lauflängen in jeder Zeile als durchgezogener Strich dargestellt ist.

Jedes einzelne Zeichen wird in eine Lauflängen-Kodierung im Feinraster gewandelt. Die Lauflängen-Kodierung erlaubt eine besonders einfache Umsetzung in Grauwerte des groberen Bildschirmrasters. Es wird ein Strich, dessen Anfangspunkt im Feinraster in x-Richtung die Nummer iₓ (Numerierung beginnend bei 0), in y-Richtung die Nummer i_{y} und eine Lauflänge von Lₓ Bildpunkten in x-Richtung hat. Die zu der betrachten Feinrasterzeile gehörige Bildschirmraster-Bildpunkt Nummer in y-Richtung I_{y} ergibt sich durch Teilen von i_{y} durch m und Abrunden auf die nächste ganze Zahl. Dann wird die Nummer iₓ des Anfangsrasterpunktes des Striches durch m geteilt, auf die nächste ganze Zahl abgerundet, was die zugehörige Nummer Iₓ des Bildschirmraster-Bildpunktes, in dem der Strich beginnt, ergibt. Die zugehörige Anzahl der weißen Feinraster-Bildpunkte in dem Bildschirmraster-Bildpunkt (Iₓ, I_{y}) ergibt sich durch iₓ - Iₓ · m. Dann wird die verbleibende Lauflänge Lₓ - (Iₓ + 1)·m - iₓ ) des bei iₓ beginnenden Striches durch m geteilt und auf die nächste ganze Zahl abgerundet, was die Anzahl der auf Iₓ folgenden Bildschirmraster-Bildpunkte ergibt, die in der betrachteten Zeile I_{y} vollständig, also jeweils mit weiteren m schwarzen Feinraster-Bildpunkten zu füllen sind. Die Anzahl der in dem auf den letzten so voll gefüllten Bildschirmraster-Bildpunkt folgenden Bildschirmraster-Bildpunkt liegenden Feinraster-Bildpunkte ist gleich dem bei der Teilung verbliebenen Rest, also (Lₓ - (Iₓ + 1)·m - iₓ )) modulo m. Damit ist die ganze Lauflänge des betrachteten Striches abgearbeitet und die resultierenden Anzahlen der gefüllten Feinraster-Bildpunkte jeweils in den betroffenen Bildschirmraster-Bildpunkten (Iₓ, I_{y}), (Iₓ+1, I_{y}), ... bestimmt. So werden aufeinanderfolgend alle zu dem Zeichen gehörenden Striche abgearbeitet. Auf diese Weise werden besonders einfach die in jedem Bildschirmraster-Bildpunkt liegenden schwarzen Feinraster-Bildpunkte ausgezählt.

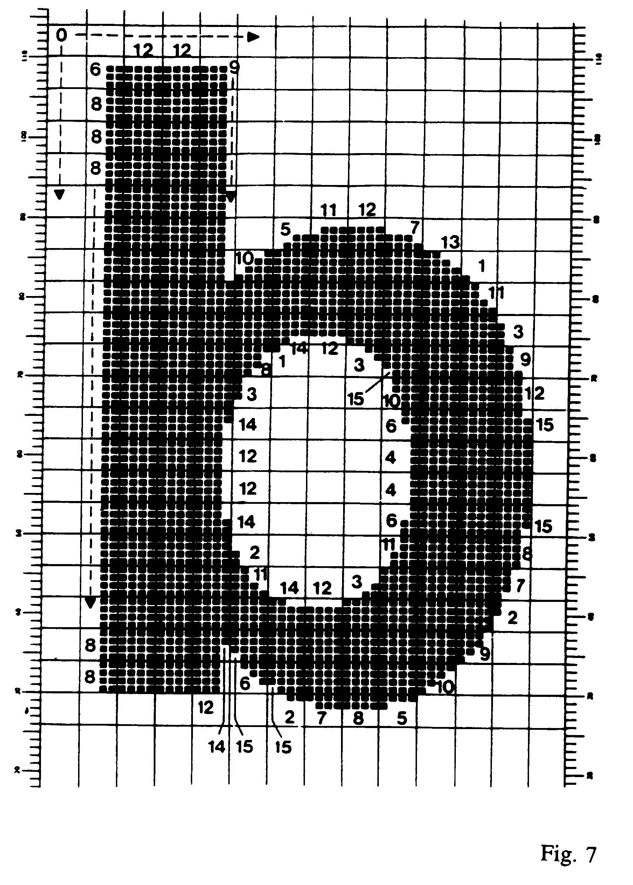

Das Ergebnis ist in Figur 7 dargestellt: gezeigt ist der Buchstabe b (hier in Bitmap-Darstellung) gerastert im Feinraster und das Bildschirmraster, wobei m = 4 und n = 4 ist. Die Ziffern geben die Anzahlen der gefüllten (schwarzen) Feinraster-Bildpunkte in den jeweiligen Bildschirmraster-Bildpunkten an, die man z.B. mit obiger Auswertung erhält.

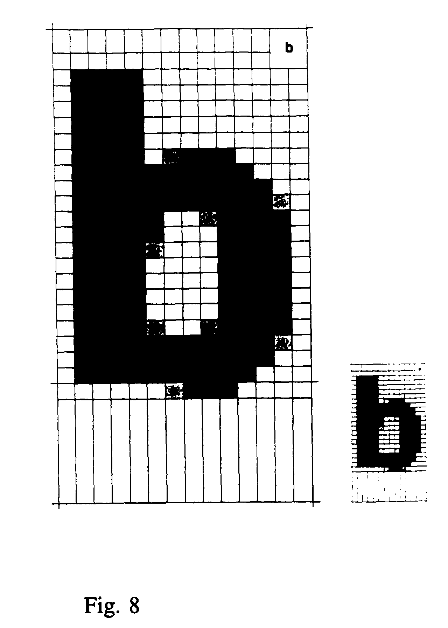

Die so ermittelte Summe der Feinraster-Bitwerte in jedem Bildschirmraster-Bildpunkt kann direkt als Grauwert interpretiert werden, indem die Summe 0 als weiß, m × n als schwarz und zwischen 0 und m × n abgestuft als hellgrau bis dunkelgrau dargestellt wird. Der Grauwert entspricht dann dem Verhältnis von schwarzen zu weißen Feinraster-Bildpunkten in dem Bildschirmraster-Bildpunkt, also einem durchschnittlichen Grauwert gemittelt über die schwarzen und weißen Feinraster-Bildpunkte darin. Der Grauwert kann jedoch auch über eine vorgegebene Abhängigkeit von der Summe ermittelt werden, insbesondere kann auch eine weniger feine Abstufung der Grauwerte, also weniger als m × n Grauwerte, vorgesehen werden. Das Ergebnis eines Buchstabens in Graudarstellung ist in Figur 8 gezeigt.

Die ermittelten Grauwerte werden in den Bildwiederholspeicher des Bildschirmgerätes übertragen, vorzugsweise indem sie auf die den jeweiligen Bildschirmraster-Bildpunkten entsprechenden Speicherplätze addiert werden.

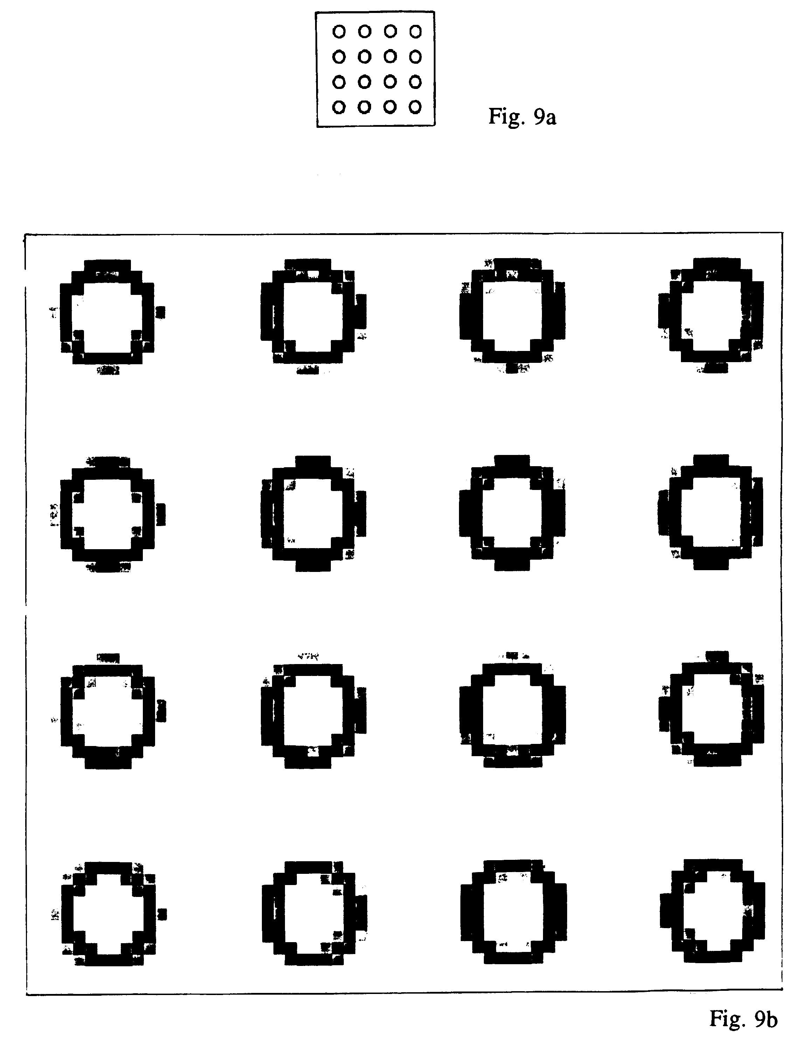

In Figur 9a sind die bei m = 4 und n = 4 möglichen 16 verschiedenen Graudarstellungen des Kleinbuchstabens o dargestellt, die sich bei Verschieben des Zeichens in x- und y-Richtung um jeweils einen Feinraster-Bildpunkt ergeben. Figur 9b zeigt eine Vergrößerung von Figur 9a, aus der deutlich das sich die Graudarstellungen eines Zeichens je nach Lage im Feinraster leicht unterscheiden.

Das erfindungsgemäße Verfahren ermöglicht ohne Erhöhung der Verarbeitungszeit eine verbessrte Lesbarkeit insbesondere von Schriften mit kleiner Punktgröße und eine Verbesserung der Bildqualität insgesamt. Durch das erfindungsgemäße Verfahren wird nicht nur an Geschwindigkeit für die Graudarstellung gewonnen, sondern auch die Flexibilität in bezug auf Schriftgröße, Position, und mögliche Verdrehung der Zeichen erhalten.

Das Verfahren ist für alle Schriften (neben lateinischen z.B. auch für Kanji-Schriften) sowie für verwandte grafische Elemente, die durch Striche und Kurven beschrieben werden, wie z.B. CAD-Darstellungen, auf Bildschirmen anwendbar.

Das erfindungsgemäße Verfahren ist für die Textdarstellung in modernen Betriebssystemen wie Mac OS oder MS Windows geeignet.

## Patentansprüche

1. Verfahren zur Text- und Grafikdarstellung auf einem Bildschirmgerät, welches ein Bildschirmraster mit einer vorgegebenen Anzahl von Bildpunkten in x- und y-Richtung und einen Bildwiederholspeicher aufweist, wobei die darzustellenden Zeichen, z.B. Buchstaben und verwandte grafische Elemente, in Konturformat aus einem Speicher geladen werden, passend zu den Textanforderungen skaliert, gedreht und positioniert werden, und wobei die auf der Kontur jedes Zeichens liegenden Rasterpunkte mittels eines Rasterverfahren, z.B. gridwalk, ermittelt werden, wobei
die Rasterung und Positionierung der Zeichen zeichenweise in einem Feinraster vorgenommen wird, in welchem jeder Bildpunkt des Bildschirmrasters in x-Richtung in m und in y-Richtung in n Feinraster-Bildpunkte unterteilt ist, wobei m, n natürliche Zahlen größer 1 sind, und jedes einzelne Zeichen in dem Feinraster in eine Lauflängen-Kodierung seiner Außenkontur gewandelt wird, bei der in jeder Feinrasterzeile der Anfangsrasterpunkt jedes aus mindestens einem gefüllten Bildpunkt bestehenden Striches in x-Richtung und die Differenz zwischen End- und Anfangsrasterpunkt des Strichs angegeben wird, und
die jeweils m × n Feinraster-Bildpunkte in jedem Bildschirmraster-Bildpunkt jedes Zeichens durch Addieren ihrer Bitwerte durch direkte Umrechnung der Lauflängen-Kodierung zusammengefaßt werden und dem Bildschirmraster-Bildpunkt ein von der Summe abhängiger Grauwert zugewiesen und in den Bildwiederholspeicher, z.B. Viertelbyte-, Halbbyte-, Bytemap-Speicher, der eine Bit-Tiefe von wenigstens der Anzahl der vorgesehenen Grauwerte aufweist, geschrieben wird.

2. Verfahren nach Anspruch 1, wobei Weiß bis Schwarz insgesamt m × n + 1 Grauwerte verwendet werden und der Grauwert eines Bildschirmraster-Bildpunktes durch die Summe der Bitwerte des Feinrasters repräsentiert wird.

3. Verfahren nach einem der vorhergehenden Ansprüche, wobei der ermittelte Grauwert eines Bildschirmraster-Bildpunktes in den Wiederholspeicher geschrieben wird, indem er auf den Inhalt des diesem Bildschirmraster-Bildpunkt entsprechenden Speicherplatzes im Bildwiederholspeicher addiert wird.

4. Verfahren nach einem der vorhergehenden Ansprüche, wobei die Rasterung im Feinraster vorgenommen wird, ohne ein intelligentes Rasterverfahren unter Verwendung der Instruktionen im Konturformat anzuwenden.

5. Verfahren nach einem der vorhergehenden Ansprüche, wobei für das Feinraster m = 8 und n = 4 gewählt wird.

6. Verfahren nach einem der Ansprüche 1 bis 4, wobei für das Feinraster m = 4 und n = 4 gewählt wird.

7. Verfahren nach einem der vorhergehenden Ansprüche, wobei bei Verwendung eines Farbbildschirms die Graustufen durch gleichmäßiges Erregen der roten, gelben und blauen Farbzentren erzeugt werden.

8. Verfahren zur Text- und Grafikdarstellung auf einem Bildschirmgerät, welches ein Bildschirmraster mit einer vorgegebenen Anzahl von Bildpunkten in x- und y-Richtung und einen Bildwiederholspeicher aufweist, wobei die darzustellenden Zeichen, z.B. Buchstaben und verwandte grafische Elemente in Konturformat aus einem Speicher geladen werden, passend zu den Textanforderungen skaliert, gedreht und positioniert werden, und wobei die auf der Kontur jedes Zeichens liegenden Rasterpunkte mittels eines Rasterverfahren, z.B. gridwalk, ermittelt werden, wobei
vor Beginn einer Textdarstellung nur einmal alle Zeichen einer vom Benutzer gewählten Schrift in einem Feinraster gerastert und positioniert werden, wobei das Feinraster in x-Richtung m-fach und in y-Richtung n-fach feiner ist als das Bildschirmraster, wobei m, n natürliche Zahlen größer 1 sind, und alle gerasterten Zeichen in eine Lauflängen-Kodierung ihrer Außenkontur gewandelt und in einem Zwischenspeicher abgespeichert werden, bei der in jeder Feinrasterzeile der Anfangsrasterpunkt jedes aus mindestens einem gefüllten Bildpunkt bestehenden Striches in x-Richtung und die Differenz zwischen End- und Anfangsrasterpunkt des Strichs angegeben wird,
zur Textdarstellung die feingerasterten Zeichen nach den Textanforderungen aus dem Zwischenspeicher abgerufen und nach ihrer Textposition in eine entsprechende Feinrasterposition im Bildschirmraster übertragen werden, und
die jeweils m × n Feinraster-Bildpunkte in jedem Bildschirmraster-Bildpunkt jedes Zeichens durch Addieren ihrer Bitwerte durch direkte Umrechnung der Lauflängen-Kodierung zusammengefaßt werden und dem Bildschirmraster-Bildpunkt ein von der Summe abhängiger Grauwert zugewiesen und in den Bildwiederholspeicher, z.B. Viertelbyte-, Halbbyte-, Bytemap-Speicher, der eine Bit-Tiefe von wenigstens der Anzahl der vorgesehenen Grauwerte aufweist, geschrieben wird.

9. Verfahren nach Anspruch 8, wobei der ermittelte Grauwert eines Bildschirmraster-Bildpunktes in den Wiederholspeicher geschrieben wird, indem er auf den Inhalt des diesem Bildschirmraster-Bildpunkt entsprechenden Speicherplatzes im Wiederholspeicher addiert wird.

## Claims

1. A method for displaying text and graphics on a display device which comprises a display screen raster with a given number of pixels in x and y direction and a video refresh memory, wherein the glyphs, for example characters and similar graphic symbols, to be displayed are loaded in an outline format from a memory, are scaled, rotated and positioned according to the text processing requirements and wherein the raster points lying on the outline of each glyph are determined by a rasterisation process, e.g. a gridwalk,
wherein rasterisation and positioning of the glyphs is done glyph by glyph in a fine raster in which each pixel of the display screen raster is subdivided in x direction into m and in y direction into n fine raster pixels, wherein m, n are natural numbers larger than 1, and wherein each glyph is transformed into a run length code of its outline in which in each fine raster line the start raster position of each stroke in x-direction consisting of at least one filled pixel and the difference between end and start raster position of the stroke are given, and
wherein the m × n fine raster pixels in each screen display pixel of each glyph are summed by adding their bit-values by direct calculation from the run length code, and a grey value depending on the sum is allocated to said screen display raster pixel and is written into the video refresh memory which has a bit depth of at least the number of provided grey-values, for example a quarterbyte-, halfbyte- or byte-map memory.

2. A method according to Claim 1, wherein m×n+1 steps of grey-values are used from black to white and wherein the grey-value of a display screen raster pixel is represented by the sum of the bit-values of the fine raster.

3. A method according to any of the preceeding claims, wherein the determined grey-value of a display screen raster pixel is written into the video refresh memory by adding it to the content of the memory location corresponding to this display screen raster pixel in the video refresh memory.

4. Method according to any of the preceeding claims, wherein the rasterisation is performed in the fine raster without performing an intelligent rasterisation method utilizing the instructions of the outlined format.

5. Method according to any of the preceeding claims, wherein for the fine raster m=8 and n=4 is chosen.

6. Method according to any of the claims 1 to 4, wherein for the fine raster m=4 and n=4 is chosen.

7. A method according to any of the preceeding claims, wherein, when using a colour display screen, the grey steps are generated by uniform excitation of the red, yellow and blue colour centers.

8. A method for displaying text and graphics on a display device which comprises a display screen raster with a given number of pixels in x and y direction and a video refresh memory, wherein the glyphs, for example characters and similar graphic symbols, to be displayed are loaded in an outline format from a memory, are scaled, rotated and positioned according to the text processing requirements and wherein the raster points lying on the outline of each glyph are determined by a rasterisation process, e.g. a gridwalk,
wherein before the begin of a text display all glyphs of a script selected by the user are rastered in a fine raster only once which is in x direction m times and in y direction n times finer than the display screen raster, wherein m, n are natural numbers larger than 1, and wherein each glyph is transformed into a run length code of its outline, in which in each fine raster line the start raster position of each stroke in x-direction consisting of at least one filled pixel and the difference between end and start raster position of the stroke are given, and is stored in an intermediate storage,
wherein for text display the fine rastered glyphs are recalled from the intermediate storage according to the text processing requirements and are, according to their position in the text, transferred to a corresponding fine raster position in the display screeen raster,
wherein the m × n fine raster pixels in each screen display pixel of each glyph are summed by adding their bit-values by direct calculation from the run length code, and a grey value depending on the sum is allocated to said screen display raster pixel and is written into the video refresh memory which has a bit depth of at least the number of provided grey-values, for example a quarterbyte-, halfbyte- or byte-map memory.

9. A method according to Claim 8, wherein the determined grey-value of a display screen raster pixel is written into the video refresh memory by adding it to the content to the memory location corresponding to this display screen raster pixel in the video refresh memory.

## Revendications

1. Procédé permettant l'affichage de textes et graphismes sur une unité de visualisation, pourvue d'un quadrillage écran d'un nombre fixe de points d'image en direction x et y ainsi que d'une mémoire de rafraîchissement d'image, les signes à afficher, comme par exemple des lettres et autres éléments graphiques semblables, étant chargés en format contour à partir d'une mémoire de stockage, mis à l'échelle, en rotation et positionnés selon les exigences de la mise en page du texte, les points de quadrillage à placer sur les contours des signes étant déterminés par un procédé de quadrillage, comme par exemple le "grid walk",
le quadrillage et le positionnement des signes étant réalisés dans un quadrillage fin, pour lequel chaque point d'image du quadrillage écran est subdivisé en direction x en m et en direction y en n points de quadrillage fin, m et n étant des nombres naturels supérieur à un, chaque signe étant converti en codage de plage ("running length") de son contour extérieur dans le quadrillage fin, codage donnant pour chaque ligne du quadrillage fin et pour chaque trait en direction de x, consistant d'au moins un point rempli, le point de quadrillage de départ et la différence entre le point d'arrivée et le point de départ,
les m x n points du quadrillage fin étant agrégés dans chaque point du quadrillage écran par addition de leurs valeurs bit par calcul direct à partir du codage de plage (" running length "), attribuant ainsi au point de quadrillage écran un niveau de gris dépendant de cette somme et l'inscrivant dans la mémoire de rafraîchissement d'image, qui comporte une profondeur de bits par point correspondant au moins au nombre de niveaux de gris prévu, par exemple une mémoire image à profondeur d'un quart d'octet, d'un demi octet ou d'un octet.

2. Procédé selon revendication 1, m x n + 1 niveaux de gris étant utilisés du blanc au noir et le niveau de gris d'un point de quadrillage écran étant représenté par la somme des valeurs bit du quadrillage fin.

3. Procédé selon une des revendications précédentes, le niveau de gris calculé pour un point de quadrillage écran étant inscrit dans la mémoire de rafraîchissement d'écran, en l'additionnant au contenu de l'emplacement de la mémoire de rafraîchissement correspondant au même point.

4. Procédé selon une des revendications précédentes, la transformation en points du quadrillage fin étant réalisée sans faire appel à un procédé de transformation en points intelligent utilisant les instructions du format contour.

5. Procédé selon une des revendications précédentes, utilisant m = 8 et n = 4 pour le quadrillage fin.

6. Procédé selon revendications 1 à 4, utilisant m = 4 et n = 4 pour le quadrillage fin.

7. Procédé selon une des revendications précédentes, les niveaux de gris étant générés par l'excitation uniforme des centre de couleurs rouge, jaune et bleu lors de l'utilisation d'une unité de visualisation couleur.

8. Procédé permettant l'affichage de textes et graphismes sur une unité de visualisation, pourvue d'un quadrillage écran d'un nombre fixe de points d'image en direction x et y ainsi que d'une mémoire de rafraîchissement d'image, les signes à afficher, comme par exemple des lettres et autres éléments graphiques semblables, étant chargés en format contour à partir d'une mémoire de stockage, mis à l'échelle, en rotation et positionnés selon les exigences de la mise en page du texte, les points de quadrillage à placer sur les contours des signes étant déterminés par un procédé de quadrillage, comme par exemple le " grid walk ",
tous les signes d'une police de caractères sélectionnée par l'utilisateur étant transformés et positionnés une seule fois avant l'affichage du texte dans un quadrillage fin, étant m fois plus fin en direction x et n fois plus fin en direction y que le quadrillage écran, m et n étant des nombres naturels supérieur à un, chaque signe étant converti en codage de plage (" running lenght ") de son contour extérieur dans le quadrillage fin, codage donnant pour chaque ligne du quadrillage fin et pour chaque trait en direction de x, consistant d'au moins un point rempli, le point de quadrillage de départ et la différence entre le point d'arrivée et le point de départ,
pour l'affichage du texte les signes transformés en quadrillage fin étant appelés à partir de la mémoire tampon et étant transférés dans une position quadrillage fin correspondante dans le quadrillage écran selon les exigences de la mise en page,
les m x n points du quadrillage fin étant agrégés dans chaque point du quadrillage écran par addition de leurs valeurs bit par calcul direct à partir du codage de plage (" running lenght " ), attribuant ainsi au point de quadrillage écran un niveau de gris dépendant de cette somme et l'inscrivant dans la mémoire de rafraîchissement d'image, qui comporte une profondeur de bits par point correspondant au moins au nombre de niveaux de gris prévu, par exemple une mémoire image à profondeur d'un quart d'octet, d'un demi octet ou d'un octet.

9. Procédé selon revendication 8, le niveau de gris calculé pour un point de quadrillage écran étant inscrit dans la mémoire de rafraîchissement d'écran, en l'additionnant au contenu de l'emplacement de la mémoire de rafraîchissement correspondant au même point.
